# EUROPEAN PATENT APPLICATION

(11) **EP 2 103 255 A2**
(43) Date of publication of application: **23.09.2009**
(21) Application number: 07861065.6
(22) Date of filing: 27.11.2007
(51) Int. Cl.: A61B 5/117, G06K 9/00

(54) **BIOMETRIC INFORMATION CARRIER**

(30) Priority: 09.01.2007 RU 2007100845
(71) Applicant: Zaitsev, Pavel Anatolievich, Chelyabinskaya obl. 456-318 (RU); Bichigov, Vladimir Nicolaevich, Miass Chelyabinskaya obl. 456-320 (RU); Moskin, Alexandr Vladimirovich, 456318 Miass (RU); Shapshal, Ivan Borisovich, Chelyabinskaya obl. 456-318 (RU)
(72) Inventor: Zaitsev, Pavel Anatolievich, Chelyabinskaya obl. 456-318 (RU); Bichigov, Vladimir Nicolaevich, Miass Chelyabinskaya obl. 456-320 (RU); Moskin, Alexandr Vladimirovich, 456318 Miass (RU); Shapshal, Ivan Borisovich, Chelyabinskaya obl. 456-318 (RU)
(74) Representative: Sloboshanin, Sergej
(86) International application number: PCT/RU2007/000660
(87) International publication number: WO 2008/085084

(57) **Abstract**

The invention relates to biometrics and can be used in any field of human activity where fingerprint recording is applied, substantially in criminalistics. The aim of said invention is to increase the degree of confidence of biometric data with the view to perform a mutual authentication of different biometric objects, such as a face and a hand, in such a way that the entirety of the set of biometric pattern is proved. The inventive carrier of biometric information about different patterns of biometric objects, one of which is a face and the second is a hand or fingers, which are positioned in one frame or in the respective frames of a series of sequential frames and are used for identification examination. Said carrier is linked to a display device which makes it possible to visualise the patterns of biometric objects.

## Description

The invention relates to the field of biometrics and can be used in any field of human activity where dactyloscopic recording is applied. The invention can mainly be used in crime fighting.

Carriers of collections of biometric images are known which contain information about several biometric objects, rendering it possible to identify a person. These are: RU Application 2004126108, in which the technical solution described is a carrier of biometric data comprising a recording of the face and voice of a person; US Patent 4993068, which comprises a description of an information system for the identification of a person via a collection of biometric data stored in an electronic register and recorded by different means: a camera, devices for recording the papillar pattern, the voice, the retina etc. Said carrier of biometric data combines the information obtained by means of primary carriers of biometric data comprising images of biometric objects.

Moreover, other carriers of biometric data are also widely known: A photograph with the image of a person that carries a pad on which the person's name is recorded; a sheet of paper bearing the image of the fingerprints and the signature of the person to which the fingerprints belong.

RU Patent 2241257 is known, the characterising features of which comprise a carrier of biometric data storing diverse biometric images: an image of the face and of the fingerprints.

Also, a carrier of biometric data is known which is a plastic card containing an image of the face of the person and his or her fingerprints, information about which is available on the website http://www.elsys.ru/cards.php

The known carriers of collections of biometric images do not always allow with a sufficient degree of reliability to determine whether the biometric objects belong to one and the same person. The reason is that biometric objects are recorded at different times and/or by different means, and the collection of biometric images combined on one carrier (paper or electronic) is assembled by actions of an operator, which does not exclude various types of errors destroying the pertinence of the biometric data and raising doubts as to whether they belong to one and the same person. For instance, an error of the operator could consist of an inadvertent accidental mix-up caused by a simple lapse of attention, and a programme error can falsely combine images of biometric objects, for instance by storing them not in a newly created file but in an already existing one of the same name.

The carrier of biometric information RU 2251748 is chosen as the most pertinent prior art. Said carrier relates to electronic memory devices and contains information about images of various biometric objects. To assemble a collection of the data forming the biometric information, it is necessary to use corresponding sensors recording a certain parameter. The availability of different means of recording biometric objects does not exclude the disruption of the integrity of the collection of biometric images and raises doubts concerning the mutual authenticity of the biometric images for the reasons mentioned above. Thus, the known carrier of biometric information does not solve the problem of a faithful (reliable) mutual authentication of the biometric parameters making up the collection.

The task which the claimed invention is to fulfil is the increase of the degree of reliability of the biometric data to enable a mutual authentication of different biometric objects, namely face and palm, to verify the integrity of the collection of biometric images.

Said task is solved by a carrier of biometric information about images of different biometric objects, one of which is a face and the other a palm or fingers, which are arranged in one picture or in corresponding pictures forming a series of successive pictures, and which are intended for an identification examination; said carrier being connected to a display device allowing a visualisation of the images of the biometric objects.

One implementation of the device is **characterised in that** the face and the palm are displayed on a different scale.

The information about the two different biometric objects is determined by the need to enable their mutual authentication and to increase the degree of reliability of the proof that the biometric images belong to one and the same person.

The face and the palm (or the fingers) are chosen as the different biometric objects, since they allow an identification of the person in the best possible way. Said biometric objects can be used for independent facial and dactyloscopic examinations. From these points of view the claimed combination of biometric objects is the optimum one.

The possibility of enabling a mutual authentication of biometric objects is achieved by forming an integrated biometric object by arranging different biometric objects, namely, face and palm (or fingers) in one picture or in corresponding pictures belonging to a series of successive pictures.

The use of the carrier of information about an integrated biometric object provides for the integrity of the biometric information, since the work of the operator with the information carrier abolishes actions in connection with combining information about the biometric objects.

For forming an integrated biometric object (combining different biometric objects) in one picture, the palm is placed next to the face. In another embodiment providing a series of successive pictures, the face and the palm are contained in corresponding separate pictures belonging to a series of pictures comprising, for instance, parts of the body along a line of face - neck - collarbone - shoulder - forearm - palm. Each subsequent picture belonging to the series of pictures comprises fragments of the image identical with the image of the preceding picture.

To fix the face and the palm in one picture, a photocamera, a videocamera (or a cinematic camera) is provided using digital or analogous processes. When an electronic photocamera or videocamera is used, the primary information carrier comprised by the photocamera or videocamera (or cinematic camera) is the carrier of information about the biometric images. Said information can be transferred from the primary carriers to any other information carriers.

Thus, different information carriers, namely optical and magnetic disks, a magnetic tape, a computer hard drive, can hold the biometric information about different biometric objects arranged in one picture.

The connection of the carrier of biometric information with the display device is implemented by a means that processes the information contained in one picture or in a series of successive pictures. The methods of recording information on the carrier by means of digital processes require the use of a computer as the link, enabling a visualisation of the biometric images on a graphic monitor.

Concerning the recording of the biometric information on a magnetic tape, the visualisation of the biometric images on a graphic monitor, i.e. a television monitor, becomes possible with the aid of a video tape recorder.

Thus, the display of biometric objects on a graphic monitor allows to establish the pertinence of different biometric objects, namely the face and, for instance, the palm, to one and the same person.

An additional advantage of the claimed invention is the possibility to verify whether the carrier of biometric data is real or counterfeit. Thus an expert can conclude from the image of the face and the palm placed next to it that the palm and the face were recorded at the same time and that the picture is authentic. If the video information depicts the entire arm, the expert can conclude that the palm, the arm and the face belong to one and the same person. The conclusion of the expert rules out suggestions on an accidental as well as a malevolent combination of displayed alien (non-authentic) biometric objects.

One embodiment of the claimed invention renders it possible to display biometric objects on a different scale. This is explained by the fact that the scale of elements used in the identification examination as characterising features is significantly smaller for the dactyloscopic examination than for the facial examination. The characteristic size of the outer features is measured in units of millimeters and tens of millimeters, while the size of the dactyloscopic features is measured in fractions of millimeters. For the reason mentioned, in photographic and video recordings of one picture or corresponding pictures forming a series of successive pictures, it is useful to arrange the face and the palm in such a way that the image of the palm is large by comparison with the image of the face. In any case the scale must be chosen so that the pattern of the papillar lines on the finger can be clearly seen.

These and other specialities of the technical solution are further disclosed in the description of an embodiment.

The carrier of biometric information is, for instance, the flash card of a digital photocamera with a 3.5 megapixel size of the photosensitive matrix. The images of the face and the palm recorded on said carrier can be displayed on a computer monitor with sufficient resolution, rendering it possible to carry out the identification examination.

To obtain an image of the face and the palm on one scale, the place of the take can be provided with a frame in which the face and the palm (the inner part) are arranged in a position with the fingers up.

To obtain an image on a different scale, the palm must be drawn forward with respect to the face, closer to the objective. This can be done with the help of a frame for the face and a support for the palm in the foreground. The distance between the planes (measured in the direction of the axis from the objective to the face) is approximately 40 cm.

For photographing a series of pictures, the boundaries of the pictures are chosen so that all portions of the body along a line of face - neck - collarbone - shoulder - forearm - palm are shown in the pictures of the series, and each adjacent pair of pictures in the series has common portions of the image, while at least one picture comprises images of portions of the palm or the fingers advantageous for a dactyloscopic examination.

## Claims

1. Carrier of biometric information about images of different biometric objects, one of which is a face, and the second is a palm or fingers, which are arranged in one picture or in corresponding pictures forming a series of successive pictures, and which are intended for an identification examination; said carrier being connected to a display device allowing a visualisation of the images of the biometric objects.

2. Carrier of biometric information according to claim 1, **characterised in that** the face and the palm are displayed on a different scale.
